# EUROPÄISCHE PATENTSCHRIFT

(11) **EP 4 138 337 B1**
(45) Veröffentlichungstag und Bekanntmachung des Hinweises auf die Patenterteilung: **30.09.2026**
(21) Anmeldenummer: 21192178.8
(22) Anmeldetag: 19.08.2021
(51) Int. Cl.: H04L 9/40, H04L 67/12, G07C 9/27, G07C 9/00, H04L 9/08, H04L 9/14

(54) **ABSICHERN VON ZUTRITTSRECHTEN IN EINEM SCHLIESSANLAGENSYSTEM MIT EINEM ELEKTRONISCHEN ZUTRITTSMEDIUM**
SECURING OF ACCESS RIGHTS IN A LOCKING SYSTEM WITH AN ELECTRONIC ACCESS MEDIUM
SÉCURISATION DES DROITS D'ACCÈS À UN SYSTÈME D'INSTALLATION DE FERMETURE À L'AIDE D'UN MOYEN ÉLECTRONIQUE D'ACCÈS

(43) Veröffentlichungstag der Anmeldung: 22.02.2023
(73) Patentinhaber: BKS GmbH, 42549 Velbert (DE)
(72) Erfinder: Braam, Reinhold, 46414 Rhede (DE); Lubosch, Arthur, 46537 Dinslaken (DE)
(74) Vertreter: DREISS Patentanwälte PartG mbB

(56) Entgegenhaltungen:
- US-A1- 2017 010 592
- US-A1- 2019 305 967
- US-A1- 2020 288 269

## Beschreibung

Die Erfindung betrifft ein elektronisches Zutrittsmedium für ein Schließanlagensystem, ein Schließanlagensystem und ein Verfahren zum Betreiben eines Schließanlagensystems.

Schließanlagen mit elektronischen Zutrittsmedien, insbesondere Transpondern, sind bekannt. Die Zutrittsrechte in einem Transponder können verschiedenen Angriffsszenarien, beispielsweise unberechtigtes Auslesen von Zutrittsrechten und/oder Manipulation von Zutrittsrechten, ausgesetzt werden.

Die US 2019/0305967 A1 beschreibt ein System zur Authentifizierung von Berechtigungsnachweisen basierend auf Distributed-Ledger-Technologie. Gemäß der US 2019/0305967 A1 sind digitale Berechtigungsnachweise auf einem Medium gespeichert, wobei der Zugriff auf solche Berechtigungsnachweise durch einen Nutzer mittels eines Pins oder einer biometrischen Authentifizierung erfolgt.

Der vorliegenden Erfindung liegt daher die Aufgabe zugrunde, ein Verfahren sowie ein elektronisches Zutrittsmedium und ein Schließanlagensystem bereitzustellen, mit dem ein unberechtigtes Auslesen von Zutrittsrechten und/oder Manipulation von Zutrittsrechten erschwert oder verhindert werden kann.

Eine erste Ausführungsform betrifft ein elektronisches Zutrittsmedium, insbesondere Transponder, für ein Schließanlagensystem, wobei das elektronische Zutrittsmedium wenigstens eine Recheneinheit, wenigstens eine Kommunikationsschnittstelle, wenigstens eine Speichereinheit und wenigstens ein Sicherheitsmodul, zum Ver- und/oder Entschlüsseln von Daten umfasst, dadurch gekennzeichnet, dass mit einem öffentlichen Schlüssel verschlüsselte Zutrittsrechte in der Speichereinheit hinterlegt sind und dass in dem Sicherheitsmodul, insbesondere in einem Speicher des Sicherheitsmoduls, ein privater Schlüssel und ein wenigstens ein symmetrischer Schlüssel hinterlegt ist.

Ein asymmetrisches Schlüsselpaar umfassend den öffentlichen Schlüssel sowie den privaten Schlüssel ist dem elektronischen Zutrittsmedium zugeordnet. Bei der Verwendung des elektronischen Zutrittsmediums in einem Schließanlagensystem mit mehreren elektronischen Zutrittsmedien ist jedem elektronischen Zutrittsmedium ein eigener öffentlicher Schlüssel sowie ein eigener privater Schlüssel, also ein eigenes asymmetrisches Schlüsselpaar, zugeordnet. Der öffentliche Schlüssel und der private Schlüssel eines jeweiligen elektronischen Zutrittsmediums unterscheiden sich von dem öffentlichen Schlüssel und dem privaten Schlüssel eines jeweiligen anderen elektronischen Zutrittsmediums. Der wenigstens eine symmetrische Schlüssel ist dem Schließanlagensystem zugeordnet, in dem das elektronische Zutrittsmedium verwendet wird. Für den Fall, dass ein elektronisches Zutrittsmedium in wenigstens zwei Schließanlagensystemen verwendet wird, umfasst das elektronische Zutrittsmedium auch wenigstens zwei symmetrische Schlüssel.

Der private Schlüssel verbleibt stets in dem elektronischen Zutrittsmedium und wird dort zum Entschlüsseln verwendet. Der öffentliche Schlüssel ist dem privaten Schlüssel zugeordnet und wird zum Verschlüsseln von Daten verwendet, die nur mit dem zugeordneten privaten Schlüssel entschlüsselbar sind.

Der privaten und die öffentlichen Schlüssel werden in kryptografischen Verschlüsselungsverfahren verwendet.

Die Kommunikationsschnittstelle ist beispielsweise eine RFID, Radio-Frequency Identification, - Schnittstelle, über die das elektronische Zutrittsmedium in an sich bekannter Weise kontaktlos Daten mit einem RFID-Schreib-/Lesegerät austauschen kann. Ein passives elektronisches Zutrittsmedium ohne eigene Energieversorgungsquelle kann über die Schnittstelle mit Energie versorgt werden.

Das Sicherheitsmodul ist eine vom der Speichereinheit und der Recheneinheit des elektronischen Zutrittsmediums separierte Hardwareeinheit. Das Sicherheitsmodul umfasst einen eigenen Arbeitsspeicher. Das Sicherheitsmodul umfasst vorteilhafterweise eine entsprechende Sicherheitszertifizierung, beispielsweise EAL (Evaluation Assurance Level), NIST (National Institute of Standards and Technology).

Vorteilhafterweise kann vorgesehen sein, dass die Speichereinheit einen Blockspeicher umfasst oder ein Blockspeicher ist, und der Blockspeicher eine Anzahl an n+1 Blöcken mit einem Blockindex i=0 bis n umfasst. Ein Block ist ein Datenbereich, wobei jeder Block durch den Blockindex eindeutig identifiziert ist. Unter einem Blockspeicher wird hierbei im weitesten Sinne ein in Blöcke unterteilter Speicher verstanden.

Vorteilhafterweise sind in einem jeweiligen Block des Blockspeichers Zutrittsrechte zusammen mit einem Prüfwert und/oder dem Blockindex hinterlegt. Vorteilhafterweise kann auch ein Platzhalter in einem jeweiligen Block vorgesehen sein. Beispielsweise umfasst ein Block, insbesondere ein Block mit einem Blockindex i>0 einen oder mehrere durch Bits, insbesondere Bitmaps, repräsentierten Zutrittspunkt eines Schließanlagensystem. In Abhängigkeit des Werts des Bits, 1 oder 0, liegt ein oder kein Zutrittsrecht für einen jeweiligen Zutrittspunkt vor. Weiter kann vorgesehen sein, dass in dem Block mit dem Blockindex weitere Daten, insbesondere allgemeine Zutrittsrechte und/oder Zeitzone und/oder Ablaufdatum, usw. hinterlegt sind. Die blockbasierte Speicherung ermöglicht einen schnellen Speicherzugriff und somit ein schnelles Prüfen der Zutrittsrechte. Weiter ist aus technischen Gründen vorteilafterweise auch eine nur blockweise Verschlüsselung möglich.

Bei dem Prüfwert handelt es sich um einen CRC-Wert, englisch cyclic redundancy check, der mit einer zyklischen Redundanzprüfung bestimmt werden kann um Fehler oder Modifikation in Daten bei der Übertragung oder Speicherung erkennen zu können.

Es kann sich als vorteilhaft erweisen, wenn das Sicherheitsmodul zum symmetrischen und/oder asymmetrischen Ver- und/oder Entschlüsseln ausgebildet ist. Beim asymmetrischen Ver- und/oder Entschlüsseln haben die beiden kommunizierenden Parteien im Gegensatz zu einem symmetrischen Ver- und/oder Entschlüsseln keinen gemeinsamen geheimen Schlüssel. Jede Partei Benutzer erzeugt und besitzt eigenes Schlüsselpaar, das aus einem geheimen Teil (privater Schlüssel) und einem nicht geheimen Teil (öffentlicher Schlüssel) besteht.

Es kann weiter vorgesehen sein, dass in der Speichereinheit und/oder in dem Sicherheitsmodul ein Identifikator, ID, des elektronischen Zutrittsmediums hinterlegt ist. Der Identifikator kann beispielsweise unverschlüsselt hinterlegt sein.

Eine weitere Ausführungsform betrifft ein Schließanlagensystem mit wenigstens einer Schließeinrichtung zum Verschließen und/oder Freigeben eines jeweiligen Zutrittspunkts, die Schließeinrichtung umfassend wenigstens eine Recheneinheit, wenigstens eine Kommunikationsschnittstelle, und wenigstens ein Sicherheitsmodul zum Ver- und/oder Entschlüsseln von Daten, das Schließanlagensystem weiter umfassend wenigstens ein elektronisches Zutrittsmedium, insbesondere Transponder, dadurch gekennzeichnet, dass das elektronische Zutrittsmedium gemäß einem der Ansprüche 1 bis 5 ausgebildet und dass in dem Sicherheitsmodul der Schließeinrichtung der symmetrische Schlüssel hinterlegt ist.

Das Sicherheitsmodul einer Schließeinrichtung kann ähnlich oder gleich wie das Sicherheitsmodul eines elektronischen Zutrittsmediums aufgebaut sein. Der symmetrische Schlüssel wird in dem Schließanlagensystem verwendet, um verschlüsselte Daten zwischen einem elektronischen Zutrittsmedium und einer Schließeinrichtung auszutauschen.

Die Schließeinrichtung umfasst weiter wenigstens eine Kommunikationsschnittstelle, beispielsweise eine RFID-Schnittstelle, über die die Schließeinrichtung insbesondere als RFID-Schreib/Lesegerät Daten mit dem elektronischen Zutrittsmedium austauschen kann.

Eine weitere Ausführungsform betrifft ein Verfahren zum Betreiben eines Schließanlagensystems gemäß den beschriebenen Ausführungsformen mit wenigstens einer Schließeinrichtung zum Verschließen und/oder Freigeben eines jeweiligen Zutrittspunkts und wenigstens einem elektronischen Zutrittsmedium,
das Verfahren umfassend die folgenden Schritte:
Anfordern von Zutrittsrechten durch die Schließeinrichtung bei dem elektronischen Zutrittsmedium;
Übertragen von mit dem öffentlichen Schlüssel verschlüsselten Zutrittsrechten von der Speichereinheit des elektronischen Zutrittsmediums in das Sicherheitsmodul des elektronischen Zutrittsmediums;
Entschlüsseln der Zutrittsrechte durch das Sicherheitsmodul des elektronischen Zutrittsmediums mit dem in dem Sicherheitsmodul hinterlegten privaten Schlüssel, und Verschlüsseln der Zutrittsrechte durch das Sicherheitsmodul des elektronischen Zutrittsmediums mit dem in dem Sicherheitsmodul hinterlegten symmetrischen Schlüssel; Übertragen der mit dem symmetrischen Schlüssel verschlüsselten Zutrittsrechte an die Schließeinrichtung; Entschlüsseln der Zutrittsrechte durch das Sicherheitsmodul der Schließeinrichtung und in Abhängigkeit der Zutrittsrechte Freigeben oder Verweigern eines Zutritts zu einem jeweiligen Zutrittspunkt durch die Schließeinrichtung.

Nach dem die Schließeinrichtung bei dem elektronischen Zutrittsmedium Zutrittsrechte angefordert hat, werden diese zunächst innerhalb des elektronischen Zutrittsmediums von der Speichereinheit des elektronischen Zutrittsmediums in das Sicherheitsmodul des elektronischen Zutrittsmediums übertragen. Das Sicherheitsmodul entschlüsselt die mit dem öffentlichen Schlüssel verschlüsselten Zutrittsrechte mit dem in dem Sicherheitsmodul hinterlegten privaten Schlüssel, und verschlüsselt die Zutrittsrechte mit dem symmetrischen Schlüssel. Die mit dem symmetrischen Schlüssel verschlüsselten Zutrittsrechte werden an die Schließeinrichtung übertragen und durch das Sicherheitsmodul der Schließeinrichtung entschlüsselt. In dem Sicherheitsmodul der Schließeinrichtung ist der symmetrische Schlüssel hinterlegt.

Das Verschlüsseln mit dem symmetrischen Schlüssel umfasst gemäß einer Weiterbildung auch das Verschlüsseln mit einem temporären Schlüssel, der basierend auf dem symmetrischen Schlüssel erzeugt wurde.

Es kann sich als vorteilhaft erweisen, wenn das Anfordern von Zutrittsrechten durch die Schließeinrichtung bei dem elektronischen Zutrittsmedium umfasst: Übertragen einer Challenge durch die Schließeinrichtung an das elektronische Zutrittsmedium, wobei die Challenge einen Blockindex eines Blocks des Blockspeichers des Transponders und eine Zufallszahl umfasst. Der Blockindex wird beispielweise aus einem Identifikator der Schließeinrichtung, insbesondere des Zutrittspunkts, berechnet.

Es kann sich weiter als vorteilhaft erweisen, wenn das Verfahren weiter umfasst: Ergänzen der Challenge um einen Prüfwert durch das elektronische Zutrittsmedium, Verschlüsseln der Challenge und des Prüfwerts mit dem symmetrischen Schlüssel, und Übertragen der verschlüsselten Challenge und des verschlüsselten Prüfwerts an die Schließeinrichtung. Der Prüfwert ist ebenfalls in dem Blockspeicher des elektronischen Zutrittsmediums hinterlegt.

Vorteilhafterweise ist vorgesehen, dass das Verfahren weiter umfasst: Identifizieren des elektronischen Zutrittsmediums anhand des Challenge und des Prüfwerts durch die Schließeinrichtung. Der Zutrittspunkt kennt in diesem Fall sowohl die Challenge als auch den Prüfwert und kann somit den Transponder als Sender identifizieren. Der Prüfwert ist beispielsweise in einem Speicher oder in dem Sicherheitsmodul der Schließeinrichtung hinterlegt. Durch verwenden des Prüfwerts ist sichergestellt, dass die Daten, insbesondere Zutrittsrechte, abgesichert durch den öffentlichen Schlüssel und/oder den symmetrischen Schlüssel nicht nachträglich verändert werden. Dies kann durch die Schließeinrichtung nach dem Entschlüsseln überprüft werden.

Vorteilhafterweise kann vorgesehen sein, dass das Verfahren weiter umfasst: Verifizieren der Zutrittsrechte und/oder des Prüfwerts durch die Schließeinrichtung. Das Verifizieren erfolgt beispielsweise anhand des Blockindexes. Der Blockindex errechnet sich beispielsweise aus einer ID der Schließeinrichtung, insbesondere des Zutrittspunkt. Dieser Schritt dient zur Überprüfung, ob die Zutrittsrechte des entsprechenden Blocks geschickt wurden.

Es kann sich weiter als vorteilhaft erweisen, wenn das Verfahren weiter umfasst: Bereitstellen eines temporären Schlüssels. Ein temporärer Schlüssel kann beispielsweise auf der Challenge und/oder dem Blockindex und/oder dem Prüfwert und/oder dem symmetrischen Schlüssel basieren. Der temporäre Schlüssel ist beispielsweise für eine Session, also für eine Übertragung zwischen Schließeinrichtung und elektronischem Zutrittsmedium gültig.

In Weiterbildung des Erfindungsgedankens kann es sich weiter als vorteilhaft erweisen, wenn das Schließanlagensystem weiter eine Schließanlagenverwaltungseinheit mit wenigstens einer Recheneinheit, wenigstens einer Speichereinheit und wenigstens einer Kommunikationsschnittstelle umfasst, und das Verfahren weiter umfasst:
Erzeugen des öffentlichen Schlüssels und des privaten Schlüssels durch das elektronische Zutrittsmedium, insbesondere durch das Sicherheitsmodul des elektronischen Zutrittsmediums,
Übertragen des öffentlichen Schlüssel von dem elektronischen Zutrittsmedium an die Schließanlagenverwaltungseinheit,
Verschlüsseln von Zutrittsrechten mit dem öffentlichen Schlüssel durch die Schließanlagenverwaltungseinheit, Übertragen der mit dem öffentlichen Schlüssel verschlüsselten Zutrittsrechte von der Schließanlagenverwaltungseinheit an das elektronische Zutrittsmedium und Hinterlegen der mit dem öffentlichen Schlüssel verschlüsselten Zutrittsrechte in der Speichereinheit des elektronischen Zutrittsmediums.

Die Kommunikationsschnittstelle der Schließanlagenverwaltungseinheit ist beispielsweise eine RFID-Schnittstelle, über die die Schließanlagenverwaltungseinheit mit dem elektronischen Zutrittsmedium austauschen kann.

Der öffentliche Schlüssel wird von dem elektronischen Zutrittsmedium an die Schließanlagenverwaltungseinheit übertragen. Der private Schlüssel verbleibt im Sicherheitsmodel des elektronischen Zutrittsmediums.

Die Schließanlagenverwaltungseinheit verschlüsselt Zutrittsrechte mit dem öffentlichen Schlüssel individuell für ein jeweiliges elektronisches Zutrittsmedium und überträgt diese an das elektronische Zutrittsmedium. In dem elektronischen Zutrittsmedium werden diese Zutrittsrechte in der Speichereinheit des elektronischen Zutrittsmediums hinterlegt.

Vorteilhafterweise kann das Erzeugen des öffentlichen Schlüssels und des privaten Schlüssels durch das elektronische Zutrittsmedium durch die Schließanlagenverwaltungseinheit ausgelöst werden. Die Schließanlagenverwaltungseinheit triggert das Erzeugen der Schlüssel beispielsweis durch eine entsprechende Nachricht.

Weiter erweist es sich als vorteilhaft, wenn das Verfahren weiter umfasst:
Erzeugen eines zum öffentlichen Schlüssels zugehörigen Zertifikats durch das elektronische Zutrittsmedium und Übertragen des Zertifikats, insbesondere zusammen mit dem öffentlichen Schlüssel an die Schließanlagenverwaltungseinheit,
Überprüfen des Zertifikats und/oder des öffentlichen Schlüssels durch die Schließanlagenverwaltungseinheit. Das Zertifikat wird beispielweise beim Prüfen des öffentlichen Schlüssels durch das Schlüsselverwaltungsprogramm geprüft. Ist das Zertifikat fehlerhaft kann das elektronische Zutrittsmedium nicht in einer Schließanlage verwendet werden.

Das Verfahren kann weiter das Erzeugen eines Prüfwerts, insbesondere beim Verschlüsseln der Zutrittsrechte, durch die Schließanlagenverwaltungseinheit umfassen. Der Prüfwert wird, insbesondere zusammen mit den verschlüsselten Zutrittsrechten, an das elektronische Zutrittsmedium übertragen und in der Speichereinheit, insbesondere in einem jeweiligen Block des Blockspeichers, hinterlegt.

Weiter erweist es sich als vorteilhaft, wenn das Verfahren weiter umfasst: Zuweisen eines Identifikators, ID, an das elektronische Zutrittsmedium durch die Schließanlagenverwaltungseinheit. Der Identifikator kann von der Schließanlagenverwaltungseinheit verwendet werden, um eine Zuordnung zwischen einem elektronischen Zutrittsmedium und einem jeweiligen öffentlichen Schlüssel herzustellen. Weiter kann der Identifikator in einer Schließeinrichtung eines Zutrittspunkt für die Rechteverwaltung verwendet werden.

Weiter erweist es sich als vorteilhaft, wenn das Verfahren weiter umfasst: Übertragen des mit dem öffentlichen Schlüssel verschlüsselten symmetrischen Schlüssel von der Schließanlagenverwaltungseinheit an das Zutrittsmedium.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung beziehungsweise Darstellung in der Beschreibung beziehungsweise in der Zeichnung.

In der Zeichnung zeigt:
- Figur 1: schematisch eine erste Ausführungsform eines Schließanlagensystems,
- Figur 2: ein Kommunikationsdiagramm der Ausführungsform gemäß Figur 1.

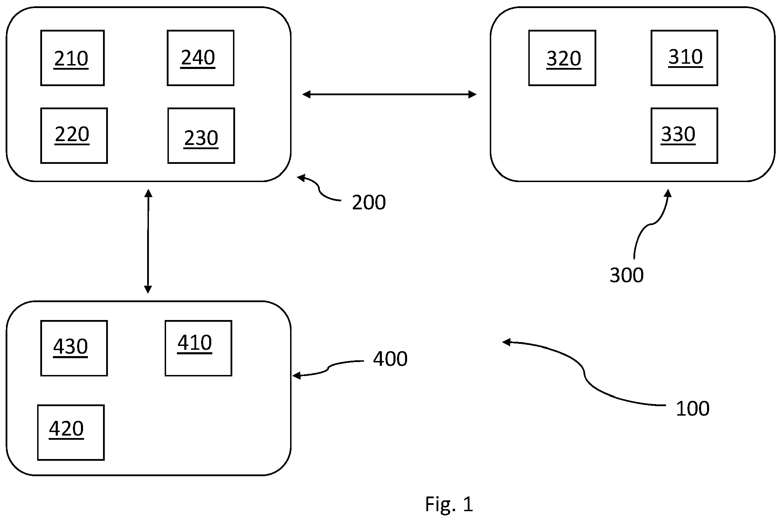

Figur 1 zeigt schematisch ein Schließanlagensystem 100. Das Schließanlagensystem 100 umfasst schematisch ein elektronisches Zutrittsmedium 200, eine Schließeinrichtung 300 und eine Schließanlagenverwaltungseinheit 400. Das Schließanlagensystem 100 kann weitere nicht dargestellte elektronische Zutrittsmedien 200 und weitere nicht dargestellte Schließeinrichtungen 300 umfassen.

Das elektronische Zutrittsmedium 200 umfasst eine Recheneinheit 210, beispielsweise einen Mikrocontroller, eine Speichereinheit 220 und wenigstens ein Sicherheitsmodul 230, zum Ver- und/oder Entschlüsseln von Daten.

Die Speichereinheit 220 ist beispielsweise ein Blockspeicher mit einer Anzahl an n+1 Blöcken mit einem Blockindex i=0 bis n umfasst. Ein Block ist ein Datenbereich, wobei jeder Block durch den Blockindex eindeutig identifiziert ist.

Vorteilhafterweise sind in einem jeweiligen Block des Blockspeichers mit einem öffentlichen Schlüssel verschlüsselte Zutrittsrechte, insbesondere zusammen mit einem Prüfwert und/oder dem Blockindex, hinterlegt. Vorteilhafterweise kann auch ein Platzhalter in einem jeweiligen Block vorgesehen sein. Beispielsweise umfasst ein Block, insbesondere ein Block mit einem Blockindex i>0 einen oder mehrere durch Bits, insbesondere Bitmaps, repräsentierten Zutrittspunkt des Schließanlagensystem 100. In Abhängigkeit des Werts des Bits, 1 oder 0, liegt ein oder kein Zutrittsrecht für einen jeweiligen Zutrittspunkt vor. Weiter kann vorgesehen sein, dass in dem Block mit dem Blockindex weitere Daten, insbesondere allgemeine Zutrittsrechte und/oder Zeitzone und/oder Ablaufdatum, usw. hinterlegt sind.

Das Sicherheitsmodul 230 ist eine vom der Speichereinheit 220 und der Recheneinheit 210 des elektronischen Zutrittsmediums separierte Hardwareeinheit. Das Sicherheitsmodul 230 umfasst einen vorteilhafterweise einen eigenen Speicher, insbesondere Arbeitsspeicher. Das Sicherheitsmodul 230 umfasst vorteilhafterweise eine entsprechende Sicherheitszertifizierung, beispielsweise EAL (Evaluation Assurance Level), NIST (National Institute of Standards and Technology). In dem Sicherheitsmodul 230, insbesondere in einem Speicher des Sicherheitsmoduls 230, ist ein privater Schlüssel und wenigstens ein symmetrischer Schlüssel hinterlegt.

Die Recheneinheit 210 ist insbesondere dazu ausgebildet Daten, insbesondere verschlüsselte Daten, in dem Speicher 220 zu hinterlegen, Daten in das Sicherheitsmodul 230 zu schreiben und zu lesen und/oder das Sicherheitsmodul 230 zur asymmetrischen und/oder symmetrischen Verschlüsselung anzusteuern.

Weiter umfasst das elektronische Zutrittsmedium 200 eine Kommunikationsschnittstelle 240. Die Kommunikationsschnittstelle 240 ist beispielsweise eine RFID, Radio-Frequency Identification, - Schnittstelle, über die das elektronische Zutrittsmedium 200 in an sich bekannter Weise kontaktlos Daten mit einem RFID-Schreib-/Lesegerät, insbesondere mit der Schließeinrichtung 300 und der Schließanlagenverwaltungseinheit 400 austauschen kann. Ein passives elektronisches Zutrittsmedium ohne eigene Energieversorgungsquelle kann über die Schnittstelle 240 mit Energie versorgt werden.

Es kann weiter vorgesehen sein, dass in der Speichereinheit 220 und/oder in dem Sicherheitsmodul 230 ein Identifikator, ID, des elektronischen Zutrittsmediums 200 hinterlegt ist. Der Identifikator kann beispielsweise unverschlüsselt hinterlegt sein.

Die Schließeinrichtung 300 ist einem nicht dargestellten Zutrittspunkt, insbesondere einer Tür oder einem Tor, zugeordnet. Die Schließeinrichtung 300 umfasst beispielsweise einen nicht weiter dargestellten Schließzylinder der über ein Betätigungselement betätigbar, insbesondere öffenbar und schließbar, ist. Das Betätigungselement kann beispielsweise über eine Recheneinheit 310 der Schließeinrichtung 300 in Abhängigkeit von Zutrittsrechten angesteuert werden.

Die Schließeinrichtung 300 umfasst eine Kommunikationsschnittstelle 320 insbesondere RFID-Schnittstelle, über die die Schließeinrichtung 300 Daten, insbesondere Zutrittsrechte, mit dem elektronischen Zutrittsmedium 200 austauschen kann.

Weiter umfasst die Schließeinrichtung 300 ein Sicherheitsmodul 330, in dem ebenfalls der symmetrische Schlüssel hinterlegt ist.

Der öffentliche Schlüssel sowie der private Schlüssel sind dem elektronischen Zutrittsmedium 200 zugeordnet. Bei der Verwendung des elektronischen Zutrittsmediums 200 in einem Schließanlagensystem 100 mit mehreren elektronischen Zutrittsmedien 200 ist jedem elektronischen Zutrittsmedium 200 ein eigener öffentlicher Schlüssel sowie ein eigener privater Schlüssel zugeordnet. Der öffentliche Schlüssel und der private Schlüssel eines jeweiligen elektronischen Zutrittsmediums 200 unterscheiden sich von dem öffentlichen Schlüssel und dem privaten Schlüssel eines jeweiligen anderen elektronischen Zutrittsmediums. Der symmetrische Schlüssel ist dem Schließanlagensystem 100 zugeordnet, in dem das elektronische Zutrittsmedium 200 verwendet wird.

Der private Schlüssel verbleibt stets in dem elektronischen Zutrittsmedium 200 und wird dort von dem Sicherheitsmodul 230 zum Entschlüsseln verwendet. Der öffentliche Schlüssel und der symmetrische Schlüssel werden zum Verschlüsseln verwendet.

Der symmetrische Schlüssel wird zum Austausch von verschlüsselten Zutrittsrechten zwischen dem elektronischen Zutrittsmedium 200 und der Schließeinrichtung 300 verwendet.

Der erste öffentliche Schlüssel wird zum Austausch von verschlüsselten Zutrittsrechten zwischen dem elektronischen Zutrittsmedium 200 und der Schließanlagenverwaltungseinheit 400 verwendet. Weiter sind die Zutrittsrechte auch innerhalb des elektronischen Zutrittsmediums 200 entweder mit dem öffentlichen Schlüssel oder mit dem symmetrischen Schlüssel verschlüsselt.

Die Zutrittsrechte werden also an keiner Stelle unverschlüsselt übertragen.

Die Schließanlagenverwaltungseinheit 400 ist dazu ausgebildet Zutrittsrechte zu verwalten und einem jeweiligen elektronischen Zutrittsmedium 200 eines Schließanlagensystems 100 zuzuweisen.

Die Schließanlagenverwaltungseinheit 400 umfasst eine Recheneinheit 410, insbesondere zum Ausführen eines Computerprogramms zum Verwalten von Zutrittsrechten, eine Speichereinheit 420, insbesondere eine sichere Speichereinheit, in der Zutrittsrechte und/oder öffentliche Schlüssel und gegebenenfalls weitere Daten wie beispielsweise Identifikatoren von elektronischen Zutrittsmedien 200 hinterlegt sind und eine Kommunikationsschnittstelle 430, beispielsweise eine RFID-Schnittstelle.

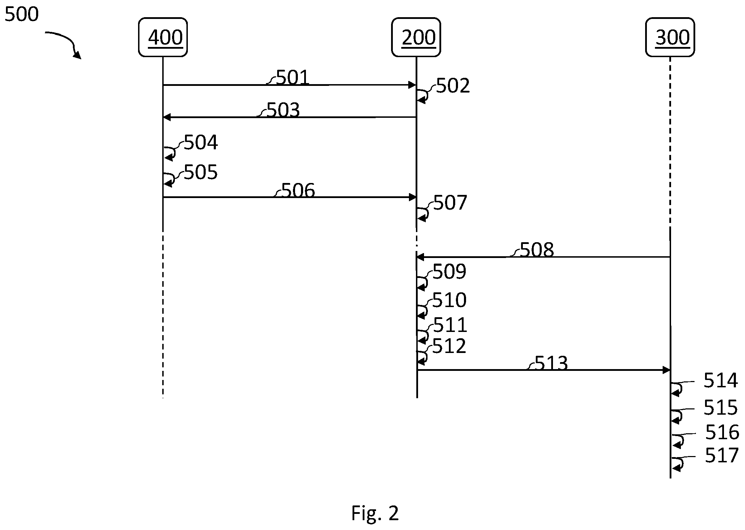

In Figur 2 ist ein Kommunikationsdiagramm 500 des Schließanlagensystems 100 dargestellt.

In einem ersten Schritt 501 wird durch die Schließanlagenverwaltungseinheit 400 das Erzeugen des öffentlichen Schlüssels und des privaten Schlüssels durch das elektronische Zutrittsmedium 200 ausgelöst. Die Schließanlagenverwaltungseinheit 400 triggert das Erzeugen der Schlüssel beispielsweis durch Senden einer entsprechenden Nachricht an das elektronische Zutrittsmedium 200.

Das Sicherheitsmodul 230 des elektronischen Zutrittsmediums 200 erzeugt in einem Schritt 502 den öffentlichen Schlüssel und den privaten Schlüssel, insbesondere durch entsprechende Ansteuerung durch die Recheneinheit 210.

In einem Schritt 503 wird der öffentliche Schlüssel von dem elektronischen Zutrittsmedium 200 an die Schließanlagenverwaltungseinheit 400 übertragen.

Die Schritte 502 und 503 können das Erzeugen eines zum öffentlichen Schlüssels zugehörigen Zertifikats durch das elektronische Zutrittsmedium 200 und das Übertragen des Zertifikats, insbesondere zusammen mit dem öffentlichen Schlüssel an die Schließanlagenverwaltungseinheit 400 umfassen.

In dem Schritt 504 wird das Zertifikats und/oder der öffentliche Schlüssel durch die Schließanlagenverwaltungseinheit 400 überprüft.

In dem Schritt 505 werden Zutrittsrechte mit dem öffentlichen Schlüssel durch die Schließanlagenverwaltungseinheit 400 verschlüsselt.

In dem Schritt 506 werden mit dem öffentlichen Schlüssel verschlüsselte Zutrittsrechte von der Schließanlagenverwaltungseinheit 400 an das elektronische Zutrittsmedium 200 übertragen.

In dem Schritt 507 werden mit dem öffentlichen Schlüssel verschlüsselte Zutrittsrechte in der Speichereinheit 220 des elektronischen Zutrittsmediums 200 hinterlegt.

Das Verfahren 500 kann weiter das Zuweisen eines Identifikators, ID, an das elektronische Zutrittsmedium 200 durch die Schließanlagenverwaltungseinheit 400, umfassen, dieser Schritt kann beispielsweise in Schritt 501 ausgeführt werden.

Bei der Verwendung des elektronischen Zutrittsmediums 200 zum Betätigen der Schließeinrichtung 300 wird dieser in die Nähe der Schließeinrichtung 300 gebracht.

In dem Schritt 508 fordert die Schließeinrichtung 300 Zutrittsrechte bei dem elektronischen Zutrittsmedium 200 an.

Das Anfordern von Zutrittsrechten durch die Schließeinrichtung 300 bei dem elektronischen Zutrittsmedium 200 kann das Übertragen einer Challenge durch die Schließeinrichtung 300 an das elektronische Zutrittsmedium 200, umfassen, wobei die Challenge einen Blockindex eines Blocks des Blockspeichers des elektronischen Zutrittsmediums 200 und eine Zufallszahl umfasst.

In dem Schritt 509 werden mit dem öffentlichen Schlüssel verschlüsselte Zutrittsrechte von der Speichereinheit 220 des elektronischen Zutrittsmediums 200 in das Sicherheitsmodul 230 des elektronischen Zutrittsmediums 200 übertragen.

In dem Schritt 510 erfolgt das Entschlüsseln der Zutrittsrechte durch das Sicherheitsmodul 230 des elektronischen Zutrittsmediums 200 mit dem in dem Sicherheitsmodul 230 hinterlegten privaten Schlüssel.

In dem Schritt 511 erfolgt das Ergänzen der Challenge um einen Prüfwert durch das elektronische Zutrittsmedium 200.

In dem Schritt 512 erfolgt das Verschlüsseln der Zutrittsrechte durch das Sicherheitsmodul 230 des elektronischen Zutrittsmediums 200 mit dem in dem Sicherheitsmodul 230 hinterlegten symmetrischen Schlüssel und/oder das Verschlüsseln der Challenge und des Prüfwerts mit dem symmetrischen Schlüssel.

In dem Schritt 513 erfolgt das Übertragen der mit dem symmetrischen Schlüssel verschlüsselten Zutrittsrechte an die Schließeinrichtung 300 und/oder das Übertragen der verschlüsselten Challenge und des verschlüsselten Prüfwerts an die Schließeinrichtung 300.

In dem Schritt 514 erfolgt das Identifizieren des elektronischen Zutrittsmediums 200 anhand der Challenge und des Prüfwerts durch die Schließeinrichtung 300.

In dem Schritt 515 erfolgt das Entschlüsseln der Zutrittsrechte durch das Sicherheitsmodul 330 der Schließeinrichtung 300.

In dem Schritt 516 erfolgt das Verifizieren der Zutrittsrechte und/oder des Prüfwerts durch die Schließeinrichtung 300.

In dem Schritt 517 wird in Abhängigkeit der Zutrittsrechte ein Zutritt zu dem der Schließeinrichtung 300 zugeordneten Zutrittspunkt durch die Schließeinrichtung 300 freigegeben oder verweigert.

## Patentansprüche

1. Elektronisches Zutrittsmedium (200), insbesondere Transponder, für ein Schließanlagensystem (100), wobei das elektronische Zutrittsmedium (200) wenigstens eine Recheneinheit (210), wenigstens eine Kommunikationsschnittstelle (240), wenigstens eine Speichereinheit (220) und wenigstens ein Sicherheitsmodul (230) zum Ver- und/oder Entschlüsseln von Daten umfasst, wobei mit einem öffentlichen Schlüssel verschlüsselte Zutrittsrechte in der Speichereinheit (220) hinterlegt sind und dass in dem Sicherheitsmodul (230), insbesondere in einem Speicher des Sicherheitsmoduls (230), ein privater Schlüssel und wenigstens ein symmetrischer Schlüssel hinterlegt ist, wobei das elektronisches Zutrittsmedium (200) derart ausgebildet ist, dass mit dem öffentlichen Schlüssel verschlüsselten Zutrittsrechte von der Speichereinheit (220) des elektronischen Zutrittsmediums (200) in das Sicherheitsmodul (230) des elektronischen Zutrittsmediums (200) übertragen werden, und dass die Zutrittsrechte durch das Sicherheitsmodul (230) des elektronischen Zutrittsmediums (200) mit dem in dem Sicherheitsmodul (230) hinterlegten privaten Schlüssel entschlüsselt werden, und dass die Zutrittsrechte durch das Sicherheitsmodul (230) mit dem in dem Sicherheitsmodul (230) hinterlegten symmetrischen Schlüssel verschlüsselt werden und die mit dem symmetrischen Schlüssel verschlüsselten Zutrittsrechte an eine Schließeinrichtung (300) des Schließanlagensystems übertragen werden.

2. Elektronisches Zutrittsmedium (200) nach Anspruch 1, wobei die Speichereinheit (220) einen Blockspeicher umfasst oder ein Blockspeicher ist, und der Blockspeicher eine Anzahl an n+1 Blöcken mit einem Blockindex i=0 bis n umfasst.

3. Elektronisches Zutrittsmedium (200) nach Anspruch 2, wobei in einem jeweiligen Block des Blockspeichers Zutrittsrechte zusammen mit einem Prüfwert und/oder einem Blockindex hinterlegt sind.

4. Elektronisches Zutrittsmedium (200) nach einem der vorhergehenden Ansprüche, wobei das Sicherheitsmodul (230) zum symmetrischen und/oder asymmetrischen Ver- und/oder Entschlüsseln ausgebildet ist.

5. Elektronisches Zutrittsmedium (200) nach einem der vorhergehenden Ansprüche, wobei in der Speichereinheit (220) und/oder in dem Sicherheitsmodul (230) ein Identifikator, ID, des elektronischen Zutrittsmediums (200) hinterlegt ist.

6. Schließanlagensystem (100) mit wenigstens einer Schließeinrichtung (300) zum Verschließen und/oder Freigeben eines jeweiligen Zutrittspunkts, die Schließeinrichtung (300) umfassend wenigstens eine Recheneinheit (310), wenigstens eine Kommunikationsschnittstelle (310), und wenigstens ein Sicherheitsmodul (330) zum Ver- und/oder Entschlüsseln von Daten, das Schließanlagensystem (100) weiter umfassend wenigstens ein elektronisches Zutrittsmedium (200), insbesondere Transponder, **dadurch gekennzeichnet, dass** das elektronische Zutrittsmedium (200) gemäß einem der Ansprüche 1 bis 5 ausgebildet und dass in dem Sicherheitsmodul (330) der Schließeinrichtung (300) der symmetrische Schlüssel hinterlegt ist.

7. Verfahren (500) zum Betreiben eines Schließanlagensystems gemäß Anspruch 6 mit wenigstens einer Schließeinrichtung (300) zum Verschließen und/oder Freigeben eines jeweiligen Zutrittspunkts und wenigstens einem elektronischen Zutrittsmedium (200), das Verfahren (500) umfassend die folgenden Schritte:
Anfordern (508) von Zutrittsrechten durch die Schließeinrichtung (300) bei dem elektronischen Zutrittsmedium (200);
Übertragen von mit dem öffentlichen Schlüssel verschlüsselten Zutrittsrechten von der Speichereinheit (220) des elektronischen Zutrittsmediums (200) in das Sicherheitsmodul (230) des elektronischen Zutrittsmediums (200);
Entschlüsseln der Zutrittsrechte durch das Sicherheitsmodul (230) des elektronischen Zutrittsmediums (200) mit dem in dem Sicherheitsmodul (230) hinterlegten privaten Schlüssel, und Verschlüsseln der Zutrittsrechte durch das Sicherheitsmodul (230) des elektronischen Zutrittsmediums (200) mit dem in dem Sicherheitsmodul (230) hinterlegten symmetrischen Schlüssel; Übertragen der mit dem symmetrischen Schlüssel verschlüsselten Zutrittsrechte an die Schließeinrichtung (300);
Entschlüsseln der Zutrittsrechte durch das Sicherheitsmodul (330) der Schließeinrichtung (330) und in Abhängigkeit der Zutrittsrechte Freigeben oder Verweigern eines Zutritts zu einem jeweiligen Zutrittspunkt durch die Schließeinrichtung (300).

8. Verfahren (500) nach Anspruch 7, wobei das Anfordern (508) von Zutrittsrechten durch die Schließeinrichtung (300) bei dem elektronischen Zutrittsmedium (200) umfasst:
Übertragen einer Challenge durch die Schließeinrichtung (300) an das elektronische Zutrittsmedium (200), wobei die Challenge einen Blockindex eines Blocks des Blockspeichers des elektronischen Zutrittsmediums (200) und eine Zufallszahl umfasst.

9. Verfahren (500) nach Anspruch 8, wobei das Verfahren (500) weiter umfasst: Ergänzen der Challenge um einen Prüfwert durch das elektronische Zutrittsmedium (200), Verschlüsseln der Challenge und des Prüfwerts mit dem symmetrischen Schlüssel, und Übertragen der verschlüsselten Challenge und des verschlüsselten Prüfwerts an die Schließeinrichtung (300).

10. Verfahren (500) nach Anspruch 9, wobei das Verfahren (500) weiter umfasst: Identifizieren des elektronischen Zutrittsmediums (200) anhand des Challenge und des Prüfwerts durch die Schließeinrichtung (300).

11. Verfahren (500) nach einem der Ansprüche 8 bis 10, wobei das Verfahren (500) weiter umfasst: Verifizieren der Zutrittsrechte und/oder des Prüfwerts durch die Schließeinrichtung (300).

12. Verfahren (500) nach wenigstens einem der Ansprüche 7 bis 11, wobei das Verfahren (500) weiter umfasst: Bereitstellen eines temporären Schlüssels.

13. Verfahren (500) nach wenigstens einem der Ansprüche 7 bis 12, wobei das Schließanlagensystem (100) weiter eine Schließanlagenverwaltungseinheit (400) mit wenigstens einer Recheneinheit (410), wenigstens einer Speichereinheit (420) und wenigstens einer Kommunikationsschnittstelle (430) umfasst, und das Verfahren (500) weiter umfasst:
Erzeugen (502) des öffentlichen Schlüssels und des privaten Schlüssels durch das elektronische Zutrittsmedium (200), insbesondere durch das Sicherheitsmodul (230) des elektronischen Zutrittsmediums (200),
Übertragen des öffentlichen Schlüssel von dem elektronischen Zutrittsmedium (200) an die Schließanlagenverwaltungseinheit (400), Verschlüsseln von Zutrittsrechten mit dem öffentlichen Schlüssel durch die Schließanlagenverwaltungseinheit (400),
Übertragen der mit dem öffentlichen Schlüssel verschlüsselten Zutrittsrechte von der Schließanlagenverwaltungseinheit (400) an das elektronische Zutrittsmedium (200) und Hinterlegen der mit dem öffentlichen Schlüssel verschlüsselten Zutrittsrechte in der Speichereinheit (220) des elektronischen Zutrittsmediums (200).

14. Verfahren (500) nach Anspruch 13, wobei das Erzeugen des öffentlichen Schlüssels und des privaten Schlüssels durch das elektronische Zutrittsmedium (200) durch die Schließanlagenverwaltungseinheit (400) ausgelöst wird (501).

15. Verfahren (500) nach Anspruch 13 oder 14, wobei das Verfahren weiter umfasst:
Erzeugen (502) eines zum öffentlichen Schlüssels zugehörigen Zertifikats durch das elektronische Zutrittsmedium (200) und Übertragen (503) des Zertifikats, insbesondere zusammen mit dem öffentlichen Schlüssel an die Schließanlagenverwaltungseinheit (400),
Überprüfen (504) des Zertifikats und/oder des öffentlichen Schlüssels durch die Schließanlagenverwaltungseinheit (400).

16. Verfahren (500) nach einem der Ansprüche 13 bis 15, wobei das Verfahren weiter umfasst: Zuweisen (501) eines Identifikators, ID, an das elektronische Zutrittsmedium (200) durch die Schließanlagenverwaltungseinheit (400).

17. Schließanlagensystem (100) nach Anspruch 6, mit einer eine Schließanlagenverwaltungseinheit (400) mit wenigstens einer Recheneinheit (410), wenigstens einer Speichereinheit (420) und wenigstens einer Kommunikationsschnittstelle (430) umfasst, wobei das Schließanlagensystem (100) zum Ausführen des Verfahrens nach einem der Ansprüche 7 bis 16 ausgebildet ist.

## Claims

1. Electronic access medium (200), in particular a transponder, for a locking system (100), wherein the electronic access medium (200) comprises at least one computing unit (210), at least one communication interface (240), at least one storage unit (220) and at least one security module (230) for encrypting and/or decrypting data, wherein access rights encrypted using a public key are stored in the storage unit (220), and a private key and at least one symmetric key are stored in the security module (230), in particular in a memory of the security module (230), wherein the electronic access medium (200) is designed such that access rights encrypted using the public key are transmitted from the storage unit (220) of the electronic access medium (200) to the security module (230) of the electronic access medium (200), and that the access rights are decrypted by the security module (230) of the electronic access medium (200) using the private key stored in the security module (230), and that the access rights are encrypted by the security module (230) using the symmetric key stored in the security module (230), and the access rights encrypted using the symmetric key are transmitted to a locking device (300) of the locking system.

2. Electronic access medium (200) according to claim 1, wherein the storage unit (220) comprises or is a block storage means, and the block storage means comprises a number of n+1 blocks with a block index i=0 to n.

3. Electronic access medium (200) according to claim 2, wherein access rights are stored in a relevant block of the block storage means together with a check value and/or a block index.

4. Electronic access medium (200) according to any of the preceding claims, wherein the security module (230) is designed for symmetric and/or asymmetric encryption and/or decryption.

5. Electronic access medium (200) according to any of the preceding claims, wherein an identifier, ID, of the electronic access medium (200) is stored in the storage unit (220) and/or in the security module (230).

6. Locking system (100) comprising at least one locking device (300) for locking and/or unlocking a relevant access point, the locking device (300) comprising at least one computing unit (310), at least one communication interface (310), and at least one security module (330) for encrypting and/or decrypting data, the locking system (100) further comprising at least one electronic access medium (200), in particular a transponder, **characterized in that** the electronic access medium (200) is designed according to any of claims 1 to 5, and **in that** the symmetric key is stored in the security module (330) of the locking device (300).

7. Method (500) for operating a locking system according to claim 6 with at least one locking device (300) for locking and/or unlocking a relevant access point, and at least one electronic access medium (200),
the method (500) comprising the following steps:
requesting (508) access rights from the electronic access medium (200) by means of the locking device (300);
transmitting access rights encrypted using the public key from the storage unit (220) of the electronic access medium (200) to the security module (230) of the electronic access medium (200);
decrypting the access rights by means of the security module (230) of the electronic access medium (200) using the private key stored in the security module (230), and encrypting the access rights by means of the security module (230) of the electronic access medium (200) using the symmetric key stored in the security module (230);
transmitting the access rights encrypted using the symmetric key to the locking device (300);
decrypting the access rights by means of the security module (330) of the locking device (330) and, depending on the access rights, granting or denying access to a relevant access point by means of the locking device (300).

8. Method (500) according to claim 7, wherein requesting (508) access rights from the electronic access medium (200) by means of the locking device (300) comprises:
transmitting a challenge to the electronic access medium (200) by means of the locking device (300), wherein the challenge comprises a block index of a block of the block storage means of the electronic access medium (200) and a random number.

9. Method (500) according to claim 8, wherein the method (500) further comprises: supplementing the challenge with a check value by means of the electronic access medium (200), encrypting the challenge and the check value using the symmetric key, and transmitting the encrypted challenge and the encrypted check value to the locking device (300).

10. Method (500) according to claim 9, wherein the method (500) further comprises: identifying the electronic access medium (200) using the challenge and the check value by means of the locking device (300).

11. Method (500) according to any of claims 8 to 10, wherein the method (500) further comprises: verifying the access rights and/or the check value by means of the locking device (300).

12. Method (500) according to at least one of claims 7 to 11, wherein the method (500) further comprises: providing a temporary key.

13. Method (500) according to at least one of claims 7 to 12, wherein the locking system (100) further comprises a locking system management unit (400) having at least one computing unit (410), at least one storage unit (420) and at least one communication interface (430), and the method (500) further comprises:
generating (502) the public key and the private key by means of the electronic access medium (200), in particular by means of the security module (230) of the electronic access medium (200),
transmitting the public key from the electronic access medium (200) to the locking system management unit (400), encrypting access rights using the public key by means of the locking system management unit (400),
transmitting the access rights encrypted using the public key from the locking system management unit (400) to the electronic access medium (200), and storing the access rights encrypted using the public key in the storage unit (220) of the electronic access medium (200).

14. Method (500) according to claim 13, wherein the generation of the public key and the private key by the electronic access medium (200) is triggered by the locking system management unit (400) (501).

15. Method (500) according to claim 13 or 14, wherein the method further comprises:
generating (502) a certificate belonging to the public key by means of the electronic access medium (200) and transmitting (503) the certificate, in particular together with the public key, to the locking system management unit (400),
verifying (504) the certificate and/or the public key by means of the locking system management unit (400).

16. Method (500) according to any of claims 13 to 15, wherein the method further comprises: assigning (501) an identifier, ID, to the electronic access medium (200) by means of the locking system management unit (400).

17. Locking system (100) according to claim 6, comprising a locking system management unit (400) having at least one computing unit (410), at least one storage unit (420) and at least one communication interface (430), wherein the locking system (100) is designed to carry out the method according to any of claims 7 to 16.

## Revendications

1. Support d'accès électronique (200), en particulier transpondeur, pour un système d'installation de verrouillage (100), dans lequel le support d'accès électronique (200) comprend au moins une unité de calcul (210), au moins une interface de communication (240), au moins une unité de stockage (220) et au moins un module de sécurité (230) pour chiffrer et/ou déchiffrer des données, dans lequel des droits d'accès chiffrés à l'aide d'une clé publique sont stockés dans l'unité de stockage (220), et une clé privée et au moins une clé symétrique sont stockées dans le module de sécurité (230), en particulier dans une mémoire du module de sécurité (230), dans lequel le support d'accès électronique (200) est configuré de telle sorte que des droits d'accès chiffrés à l'aide de la clé publique sont transmis de l'unité de stockage (220) du support d'accès électronique (200) au module de sécurité (230) du support d'accès électronique (200), et que les droits d'accès sont déchiffrés par le module de sécurité (230) du support d'accès électronique (200) à l'aide de la clé privée stockée dans le module de sécurité (230), et que les droits d'accès sont chiffrés par le module de sécurité (230) à l'aide de la clé symétrique stockée dans le module de sécurité (230) et que les droits d'accès chiffrés à l'aide de la clé symétrique sont transmis à un dispositif de verrouillage (300) du système d'installation de verrouillage.

2. Support d'accès électronique (200) selon la revendication 1, dans lequel l'unité de stockage (220) comprend une mémoire par blocs ou est une mémoire par blocs et que ladite mémoire par blocs comprend un nombre de blocs n+1 avec un indice de bloc i allant de 0 à n.

3. Support d'accès électronique (200) selon la revendication 2, dans lequel des droits d'accès sont stockés dans un bloc respectif de la mémoire par blocs, conjointement avec une valeur de contrôle et/ou un indice de bloc.

4. Support d'accès électronique (200) selon l'une quelconque des revendications précédentes, dans lequel le module de sécurité (230) est configuré pour le chiffrement et/ou le déchiffrement symétrique et/ou asymétrique.

5. Support d'accès électronique (200) selon l'une quelconque des revendications précédentes, dans lequel un identifiant, ID, du support d'accès électronique (200) est stocké dans l'unité de stockage (220) et/ou dans le module de sécurité (230).

6. Système d'installation de verrouillage (100) comprenant au moins un dispositif de verrouillage (300) permettant de verrouiller et/ou déverrouiller un point d'accès respectif, ledit dispositif de verrouillage (300) comprenant au moins une unité de calcul (310), au moins une interface de communication (310) et au moins un module de sécurité (330) pour le chiffrement et/ou le déchiffrement de données, ledit système d'installation de verrouillage (100) comprenant en outre au moins un support d'accès électronique (200), en particulier un transpondeur, **caractérisé par le fait que** le support d'accès électronique (200) est configuré selon l'une quelconque des revendications 1 à 5 et que la clé symétrique est stockée dans le module de sécurité (330) du dispositif de verrouillage (300).

7. Procédé (500) destiné à faire fonctionner un système d'installation de verrouillage selon la revendication 6, comprenant au moins un dispositif de verrouillage (300) pour verrouiller et/ou déverrouiller un point d'accès respectif et au moins un support d'accès électronique (200),
le procédé (500) comprenant les étapes suivantes consistant à:
faire demander (508) des droits d'accès par le dispositif de verrouillage (300) auprès du support d'accès électronique (200);
transmettre des droits d'accès, chiffrés à l'aide de la clé publique, de l'unité de stockage (220) du support d'accès électronique (200) vers le module de sécurité (230) du support d'accès électronique (200);
faire déchiffrer les droits d'accès par le module de sécurité (230) du support d'accès électronique (200) à l'aide de la clé privée stockée dans le module de sécurité (230), et faire chiffrer les droits d'accès par le module de sécurité (230) du support d'accès électronique (200) à l'aide de la clé symétrique stockée dans le module de sécurité (230);
transmettre les droits d'accès chiffrés à l'aide de la clé symétrique au dispositif de verrouillage (300);
faire déchiffrer les droits d'accès par le module de sécurité (330) du dispositif de verrouillage (330) et, en fonction des droits d'accès, faire autoriser ou refuser un accès à un point d'accès respectif par le dispositif de verrouillage (300).

8. Procédé (500) selon la revendication 7, dans lequel la demande (508) de droits d'accès par le dispositif de verrouillage (300) auprès du support d'accès électronique (200) comprend:
transmettre un défi par le dispositif de verrouillage (300) au support d'accès électronique (200), dans lequel le défi comprend un indice de bloc d'un bloc de la mémoire par blocs du support d'accès électronique (200) et un nombre aléatoire.

9. Procédé (500) selon la revendication 8, dans lequel le procédé (500) comprend en outre: faire compléter le défi par une valeur de contrôle par le support d'accès électronique (200), chiffrer le défi et la valeur de contrôle à l'aide de la clé symétrique, et transmettre le défi chiffré et la valeur de contrôle chiffrée au dispositif de verrouillage (300).

10. Procédé (500) selon la revendication 9, dans lequel le procédé (500) comprend en outre: faire identifier le support d'accès électronique (200) par le dispositif de verrouillage (300) à partir du défi et de la valeur de contrôle.

11. Procédé (500) selon l'une quelconque des revendications 8 à 10, dans lequel le procédé (500) comprend en outre: faire vérifier les droits d'accès et/ou la valeur de contrôle par le dispositif de verrouillage (300).

12. Procédé (500) selon au moins l'une quelconque des revendications 7 à 11, dans lequel le procédé (500) comprend en outre: fournir une clé temporaire.

13. Procédé (500) selon au moins l'une quelconque des revendications 7 à 12, dans lequel le système d'installation de verrouillage (100) comprend en outre une unité de gestion d'installation de verrouillage (400) comprenant au moins une unité de calcul (410), au moins une unité de stockage (420) et au moins une interface de communication (430), et le procédé (500) comprend en outre:
faire générer (502) la clé publique et la clé privée par le support d'accès électronique (200), en particulier par le module de sécurité (230) du support d'accès électronique (200);
transmettre la clé publique du support d'accès électronique (200) à l'unité de gestion d'installation de verrouillage (400);
faire chiffrer des droits d'accès à l'aide de la clé publique par l'unité de gestion d'installation de verrouillage (400);
transmettre les droits d'accès chiffrés à l'aide de la clé publique de l'unité de gestion d'installation de verrouillage (400) au support d'accès électronique (200), et stocker les droits d'accès chiffrés à l'aide de la clé publique dans l'unité de stockage (220) du support d'accès électronique (200).

14. Procédé (500) selon la revendication 13, dans lequel la génération de la clé publique et de la clé privée par le support d'accès électronique (200) est déclenchée (501) par l'unité de gestion d'installation de verrouillage (400).

15. Procédé (500) selon la revendication 13 ou 14, dans lequel le procédé comprend en outre:
faire générer (502) un certificat associé à la clé publique par le support d'accès électronique (200), et transmettre (503) le certificat, en particulier conjointement avec la clé publique, à l'unité de gestion d'installation de verrouillage (400),
faire vérifier (504) le certificat et/ou la clé publique par l'unité de gestion d'installation de verrouillage (400).

16. Procédé (500) selon l'une quelconque des revendications 13 à 15, dans lequel le procédé comprend en outre:
faire attribuer (501) un identifiant, ID, au support d'accès électronique (200) par l'unité de gestion d'installation de verrouillage (400).

17. Système d'installation de verrouillage (100) selon la revendication 6, comprenant une unité de gestion d'installation de verrouillage (400) avec au moins une unité de calcul (410), au moins une unité de stockage (420) et au moins une interface de communication (430), le système d'installation de verrouillage (100) étant configuré pour mettre en œuvre le procédé selon l'une quelconque des revendications 7 à 16.
